# FASCICULE DE BREVET EUROPEEN

(11) **EP 4 341 733 B1**
(45) Date de publication et mention de la délivrance du brevet: **31.07.2024**
(21) Numéro de dépôt: 22769326.4
(22) Date de dépôt: 22.08.2022
(51) Int. Cl.: G02B 6/122, G02B 6/125, G02B 6/28, G02B 27/00, G02F 1/295

(54) **STRUCTURE POUR COLLECTER DE LA LUMIERE**
LICHTSAMMELSTRUKTUR
LIGHT-COLLECTING STRUCTURE

(30) Priorité: 06.09.2021 FR 2109320
(43) Date de publication de la demande: 27.03.2024
(73) Titulaire: Airbus Defence and Space SAS, 31402 Toulouse Cedex 4 (FR)
(72) Inventeur: DE NAUROIS, Guy-Maël, 31402 Toulouse Cedex 4 (FR); BERCEAU, Paul, 31402 Toulouse Cedex 4 (FR)
(74) Mandataire: Plasseraud IP
(86) Numéro de dépôt international: PCT/FR2022/051593
(87) Numéro de publication internationale: WO 2023/031535

(56) Documents cités:
- EP-A1- 3 779 560
- WO-A1-2018/111316
- US-A1- 2016 245 895
- US-A1- 2017 357 055
- US-A1- 2018 321 569
- US-A1- 2019 132 534

## Description

### Domaine technique

La présente description concerne une structure pour collecter de la lumière, ainsi qu'un récepteur de communication optique par faisceau laser et un système LIDAR.

### Technique antérieure

De nombreuses applications nécessitent de collecter de la lumière selon une direction de réception identifiée, avec une efficacité de collecte qui est aussi élevée que possible. L'efficacité d'une structure collectrice de lumière est déterminée par le quotient entre la puissance lumineuse transmise par cette structure à un photodétecteur qui est situé à la sortie de la structure collectrice, par rapport à la puissance lumineuse qui est incidente sur la structure collectrice. Deux applications importantes des structures collectrices de lumière sont les récepteurs de communication optique par faisceau laser et les systèmes LIDAR, pour «Llght Détection and Ranging» en anglais, ou systèmes de détection et de mesure de distance par la lumière. Pour ces deux applications en particulier, l'efficacité de la structure collectrice de lumière qui est utilisée est un enjeu majeur.

Les structures collectrices de lumière les plus couramment utilisées sont constituées par des optiques de type télescope. Le photodétecteur est alors situé dans le plan focal du télescope, en superposition avec le point d'image qui correspond à la direction de réception. Mais de telles structures collectrices du type télescope sont volumineuses et lourdes, et les miroirs qui les constituent sont onéreux à fabriquer et difficiles à assembler avec une précision d'alignement suffisante. Disposer de structures collectrices de lumière qui aient des formes générales planes et peu épaisses constitue un autre enjeu important pour de nombreuses applications, dont les récepteurs de communication optique par faisceau laser et les systèmes LIDAR. En effet, des structures collectrices de lumière dont la forme générale est sensiblement plane et peu épaisse sont particulièrement adaptées pour être intégrées au fuselage d'un avion, notamment pour recevoir des signaux optiques de communication par faisceau laser qui sont transmis à partir d'un satellite ou d'une plateforme à haute altitude. Mais, elles peuvent aussi être avantageusement utilisées pour des récepteurs terrestres de communication optique par faisceau laser.

Des structures collectrices de lumière qui ont des formes générales planes et peu épaisses ont été proposées par ailleurs. Elles sont constituées d'un grand nombre de collecteurs élémentaires de lumière qui sont couplés en parallèle de sorte que des parties d'un faisceau lumineux incident qui sont collectées individuellement par tous les collecteurs élémentaires soient réunies dans un signal optique de sortie de la structure collectrice. Ce signal optique de sortie est alors envoyé sur un photodétecteur pour être détecté. Les collecteurs élémentaires de lumière peuvent notamment être des nano-antennes à réseau diélectrique diffractant, par exemple telles que décrites dans l'article intitulé «Large-scale nanophotonic phased array», de Jie Sun et al., Nature, vol. 493, pp. 195-199, 10 janvier 2013, ou des nano-antennes à plasmons, par exemple telles que décrites dans le chapitre intitulé «Plasmonic Nanoantenna Array Design», de Tao Dong et al., IntechOpen, 2020, DOI : http://dx.doi.org/10.5772/intechopen.90782. Chaque collecteur élémentaire possède des dimensions qui sont plus petites ou du même ordre de grandeur qu'une longueur d'onde nominale de la lumière à collecter, et un très grand nombre de collecteurs élémentaires, plusieurs milliers ou dizaines de milliers, sont couplés optiquement en parallèle pour obtenir une efficacité de collecte de lumière qui soit suffisante. Pour cela, tous les collecteurs élémentaires sont reliés à la sortie optique de la structure collectrice complète par un réseau de segments de guides d'onde.

Des modules de telles structures collectrices de lumière sont fabriqués de façon économique sous forme de circuits optiques intégrés, par des procédés de fabrication collective qui sont appliqués à des substrats appropriés. Chaque module qui est ainsi fabriqué, et qui constitue l'unité d'assemblage pour construire la structure collectrice complète, est formé par une puce («chip» en anglais), par exemple carrée de 50 mm (millimètre) de côté, qui incorpore un grand nombre de collecteurs élémentaires. Chaque module incorpore en outre des segments de guides d'onde qui couplent chaque collecteur élémentaire à une sortie optique de ce module.

Dans les structures collectrices de lumière de ce type qui existent jusqu'à présent, les collecteurs élémentaires de lumière sont disposés en lignes parallèles dans chaque module, c'est-à-dire à l'intérieur de chaque puce, avec au moins un segment de guide d'onde qui est affecté à chaque ligne de collecteurs élémentaires, et qui est appelé guide d'onde de ligne. Chaque collecteur élémentaire est couplé au guide d'onde de ligne de la ligne à laquelle il appartient, et tous les guides d'onde de lignes d'un même module sont couplés à un segment principal de guide d'onde de ce module. En outre, lorsque plusieurs modules sont associés pour constituer la structure collectrice de lumière complète, leurs segments principaux de guide d'onde respectifs sont couplés en parallèle à sortie optique de la structure complète. Une telle structure collectrice de lumière est dite linéaire, en ce qu'à l'intérieur de chaque module les collecteurs élémentaires sont rassemblés par lignes pour être couplés au segment principal de guide d'onde du module. Mais une telle structure linéaire possède une efficacité de collecte de lumière qui est dégradée à cause d'une cumulation additive des pertes de signal optique que provoquent tous les coupleurs utilisés le long de chaque guide d'onde de ligne pour coupler à celui-ci les collecteurs élémentaires. La perte totale de signal optique est ainsi proportionnelle au nombre de collecteurs élémentaires par ligne, ce qui limite de façon considérable l'efficacité de collecte de la structure complète.

Par ailleurs, lorsque la structure collectrice de lumière complète est constituée par plusieurs modules qui sont associés en parallèle, telle que connue dans US 2017/357055 A1, la lumière qui est incidente sur cette structure complète possède un front d'onde qui n'atteint pas nécessairement tous les modules simultanément. Tel est le cas lorsque le front d'onde de la lumière incidente est incliné par rapport à un plan commun qui contient tous les modules, ou lorsque les modules sont décalés individuellement d'une façon qui varie d'un module à l'autre par rapport à un plan moyen de la structure. Mais surtout, une telle situation survient aussi lorsque le front d'onde n'est pas plan, notamment parce que la lumière a traversé une portion d'atmosphère inhomogène ou turbulente avant d'atteindre la structure collectrice. Le front d'onde présente alors des décalages perpendiculairement au plan commun qui contient toutes les modules, qui varient d'un module à l'autre et qui peuvent être égaux chacun à une fraction de la longueur d'onde de la lumière, voire supérieurs à cette longueur d'onde sans correspondre à un multiple de celle-ci. Il en résulte que les signaux optiques qui sont collectés respectivement par les modules, et tels qu'ils parviennent à la sortie optique de la structure collectrice complète, présentent des déphasages non-nuls entre eux de sorte que la puissance optique qui est transmise par cette sortie optique de la structure complète est inférieure, voire très inférieure, à la somme des puissances optiques qui sont transmises individuellement par tous les modules.

### Problème technique

A partir de cette situation, un premier but de la présente invention est de proposer une nouvelle structure collectrice de lumière, qui est constituée d'un grand nombre de collecteurs élémentaires, mais qui procure une efficacité de collecte améliorée par rapport aux structures linéaires.

Un second but de l'invention est de proposer une nouvelle structure collectrice de lumière à plusieurs modules, pour laquelle la puissance optique qui est transmise en sortie par la structure n'est pas ou peu réduite par des déphasages non-nuls qui sont susceptibles d'exister entre les signaux optiques qui sont issus respectivement des modules séparés.

Ces deux buts sont indépendants, et sont avantageusement atteints simultanément par une structure collectrice de lumière qui est conforme à l'invention. Toutefois, des structures collectrices de lumière sont possibles, qui réalisent le premier but seulement sans réaliser nécessairement le second but, ou bien qui réalisent inversement le second but seulement sans réaliser nécessairement le premier but.

### Résumé de l'invention

Pour atteindre l'un au moins des buts précités ou un autre, un premier aspect de l'invention propose une structure pour collecter de la lumière qui comprend plusieurs modules, chaque module comprenant :
- un substrat ;
- des collecteurs élémentaires de lumière qui sont juxtaposés sur le substrat ; et
- un réseau de guides d'onde qui est porté par le substrat, et qui connecte optiquement chaque collecteur élémentaire de lumière du module à une sortie optique de ce module, de sorte que lorsqu'un faisceau de lumière est incident sur la structure, une partie élémentaire de ce faisceau qui est collectée par l'un quelconque des collecteurs élémentaires de lumière du module soit transmise à la sortie optique du module par l'intermédiaire du réseau de guides d'onde.

Lorsque chaque module de la structure collectrice de lumière est fabriqué sous la forme d'un circuit optique intégré, il constitue individuellement une puce qui est l'unité d'assemblage de la structure. La structure complète peut alors être assemblée de façon à constituer un panneau. Par ailleurs, chaque collecteur élémentaire peut être de type nano-antenne, en particulier du type nano-antenne à motif diélectrique diffractant ou du type nano-antenne à plasmons.

Selon le premier aspect de l'invention, le réseau de guides d'onde de chaque module possède un agencement fractal de division entre la sortie optique et les collecteurs élémentaires de lumière de ce module, selon un sens d'observation allant de la sortie optique du module vers ses collecteurs élémentaires de lumière. Grâce à un tel agencement fractal, les pertes de signal optique que provoquent tous les coupleurs au sein de chaque module ne se cumulent pas de façon additive, puisque les collecteurs élémentaires ne sont plus couplés par lignes à la sortie optique du module. Pour cette raison, l'efficacité de collecte de la lumière par chaque module, et par suite l'efficacité de collecte de lumière de la structure complète, peut être supérieure à celles des structures linéaires.

De préférence, l'agencement fractal de division du réseau de guides d'onde de l'un au moins des modules peut comprendre au moins trois niveaux de division successifs dans cet agencement fractal. Dans le jargon de l'Homme du métier, l'agencement fractal de division possède au moins trois niveaux d'échelle fractals. Par ailleurs, le nombre de niveaux de division successifs dans l'agencement fractal du réseau de guides d'onde de chaque module peut être inférieur à dix, en fonction de la taille de ce module et des dimensions individuelles de chaque collecteur élémentaire.

Dans divers modes de réalisation possibles, l'agencement fractal de division du réseau de guides d'onde de l'un au moins des modules peut comprendre des coupleurs optiques chacun à plusieurs entrées et une sortie, qui appartiennent à des niveaux de division successifs comptés à partir de la sortie optique du module. La sortie optique du module est connectée optiquement à la sortie d'un des coupleurs optiques qui constitue un premier des niveaux de division, et chaque sortie d'un coupleur optique qui appartient à un des niveaux de division supérieurs à ce premier niveau est connectée par un segment respectif de guide d'onde à une des entrées d'un coupleur optique du niveau précédent, jusqu'aux collecteurs élémentaires de lumière qui sont connectés optiquement chacun à une entrée d'un des coupleurs optiques. En particulier, dans des modes de réalisation dits à division 1>2, chaque coupleur optique possède deux entrées et une sortie. Toutefois, d'autres modes de réalisation sont aussi possibles, avec des modules qui procèdent par division 1>3 ou autres.

Dans le cas de modes de réalisation des modules à division 1 >2, l'agencement fractal de division du réseau de guides d'onde de l'un au moins des modules, comprenant les coupleurs optiques et des segments de guides d'onde, peut constituer des motifs géométriques en forme de H sur le substrat du module.

Un deuxième aspect de l'invention propose une structure pour collecter de la lumière qui comprend plusieurs modules et un coupleur optique principal à plusieurs entrées et à une seule sortie. La sortie optique de chaque module est alors connectée optiquement à une des entrées du coupleur optique principal séparément des autres modules par un chemin optique de transfert respectif qui comprend un modulateur de phase.

Selon une première caractéristique du second aspect de l'invention, la structure comprend en outre, pour chaque modulateur de phase, une source électrique de signal de modulation qui est connectée à une entrée de modulation de ce modulateur de phase, de sorte que les chemins optiques de transfert transmettent au coupleur optique principal des parties respectives du faisceau de lumière incident sur la structure, conformément à des déphasages qui sont produits par les modulateurs de phase.

Selon une deuxième caractéristique du second aspect de l'invention, les sources électriques des signaux de modulation sont agencées pour, lors d'une séquence de recherche de synchronisation, varier simultanément tous les déphasages de façon à balayer des combinaisons variables de valeurs pour tous ces déphasages.

Selon une troisième caractéristique du second aspect de l'invention, la structure collectrice de lumière comprend en outre :
- un système de détection de synchronisation, qui est agencé pour détecter, pendant la séquence de recherche de synchronisation, un instant de synchronisation auquel la sortie du coupleur optique principal transmet une puissance lumineuse qui est maximale ; et
- un système de sélection, qui est adapté pour sélectionner les valeurs des déphasages telles qu'existantes à l'instant de synchronisation, et pour commander, après une interruption de la séquence de recherche de synchronisation, un fonctionnement des sources électriques des signaux de modulation pour lequel les déphasages produits par les modulateurs de phase sont conformes aux valeurs sélectionnées.

Toutes ces caractéristiques du deuxième aspect de l'invention permettent de compenser des déphasages qui peuvent exister entre les signaux optiques de sortie qui proviennent séparément de tous les modules, si bien que la puissance lumineuse qui est transmise par la structure complète à un photodétecteur peut être maximale. Un tel deuxième aspect d'invention est particulièrement avantageux lorsque les différents modules peuvent présenter des décalages d'assemblage en constituant un panneau complet, ou lorsque le faisceau de lumière incident peut présenter une inclinaison variable par rapport à un plan moyen de la structure collectrice de lumière, que cette inclinaison soit volontaire ou non, identifiée ou non. Mais ce deuxième aspect d'invention est surtout avantageux lorsque le faisceau de lumière qui est incident sur la structure a traversé une portion d'atmosphère avant d'atteindre la structure, et que cette portion d'atmosphère est susceptible de présenter des inhomogénéités et/ou des turbulences.

Chaque source électrique de signal de modulation peut être adaptée pour varier le déphasage qui est produit par le modulateur de phase correspondant selon une fréquence qui est comprise entre 10 kHz (kilohertz) et 1 MHz (mégahertz).

Chaque modulateur de phase peut être d'un type à portion de niobiate de lithium.

Dans des fonctionnements possibles de type à boucle ouverte, la structure collectrice de lumière peut être adaptée pour répéter périodiquement la séquence de recherche de synchronisation et pour activer le système de sélection à l'issue de chaque séquence de recherche de synchronisation.

Dans d'autres fonctionnements possibles de type à boucle fermée, le système de détection de synchronisation peut être adapté en outre pour détecter, au cours d'un fonctionnement de collecte de lumière par la structure à partir d'une dernière exécution de la séquence de recherche de synchronisation, une réduction de la puissance lumineuse qui est transmise par la sortie du coupleur optique principal, et pour commander, lorsqu'une telle réduction est détectée, une modification des valeurs des déphasages qui est appropriée pour restituer au moins en partie la puissance lumineuse maximale à la sortie du coupleur optique principal.

Les premier et deuxième aspects d'invention qui sont présentés ci-dessus peuvent être reproduits indépendamment l'un de l'autre dans différents modes de réalisation de structures collectrices de lumière. Toutefois, des combinaisons de ces deux aspects d'invention au sein de structures collectrices de lumière sont particulièrement avantageuses.

De façon générale pour les deux aspects précédents de l'invention, les collecteurs élémentaires de lumière et les réseaux de guides d'onde des modules peuvent être conçus pour être efficaces lorsque le faisceau de lumière qui est incident sur la structure collectrice de lumière appartient à un intervalle spectral d'efficacité de cette structure. Cet intervalle spectral d'efficacité peut être inscrit sur la structure, ou spécifié dans une notice matérielle ou électronique qui est fournie avec la structure. Alors, chaque collecteur élémentaire peut avantageusement posséder des dimensions qui sont plus petites que trois fois une longueur d'onde quelconque de l'intervalle spectral d'efficacité de la structure. De préférence, les dimensions de chaque collecteur élémentaire sont plus petites qu'une seule fois une longueur d'onde quelconque qui est à l'intérieur de l'intervalle spectral d'efficacité de la structure.

Aussi de façon générale pour les aspects précédents de l'invention, chaque module peut comporter au moins 10.000 collecteurs élémentaires de lumière qui sont connectés optiquement à la sortie optique de ce module par son réseau de guides d'onde à agencement fractal.

Un troisième aspect de l'invention propose un récepteur de communication optique par faisceau laser qui comprend :
- une structure collectrice de lumière qui est conforme au premier aspect d'invention et/ou au deuxième aspect d'invention ; et
- une voie de détection et traitement, adaptée pour extraire d'un rayonnement qui est transmis à cette voie de détection et traitement, des données qui sont encodées sous forme de modulations du rayonnement.
Alors, le récepteur est agencé de sorte que, lors d'un fonctionnement de ce récepteur et lorsque la structure collectrice de lumière collecte une portion de faisceau laser en provenance d'un terminal de communication optique par faisceau laser qui est externe au récepteur, la structure transmette la portion collectée du faisceau laser à la voie de détection et traitement.

Lorsque chaque module possède des dimensions qui sont inférieures à 10 cm (centimètre), et que la structure collectrice de lumière est conforme au deuxième aspect d'invention, et lorsque la portion du faisceau laser qui est collectée traverse une portion d'atmosphère, des déviations du front d'onde de la portion du faisceau laser qui sont causées par des fluctuations atmosphériques peuvent être compensées à l'issue d'une exécution de la séquence de recherche de synchronisation.

Enfin, un quatrième aspect de l'invention propose un système LIDAR qui comprend :
- une source laser ;
- une voie d'émission, agencée pour émettre, lors d'un fonctionnement du système LIDAR, un rayonnement issu de la source laser en direction d'au moins une cible qui est externe au système LIDAR ;
- une structure collectrice de lumière qui est conforme au premier aspect d'invention et/ou au deuxième aspect d'invention ; et
- une voie de détection et traitement LIDAR, adaptée pour fournir à partir d'un rayonnement qui est transmis à cette voie de détection et traitement LIDAR, des évaluations de position et/ou de vitesse relatives à l'au moins une cible.
Alors, la structure est disposée pour, lors du fonctionnement du système LIDAR, collecter une partie du rayonnement qui a été émis par la voie d'émission puis réfléchi ou rétrodiffusé par l'au moins une cible, et pour transmettre la partie collectée du rayonnement à la voie de détection et traitement LIDAR.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est une vue en perspective d'une structure de collecte de lumière à laquelle l'invention peut être appliquée ;
[Fig. 2] est une vue en plan d'une partie de module dans une structure de collecte de lumière telle que connue de l'art antérieur ;
[Fig. 3a] correspond à [Fig. 2] pour une structure de collecte de lumière qui est conforme à un premier aspect de l'invention ;
[Fig. 3b] montre le réseau de guides d'onde à l'intérieur du module de [Fig. 3a] ;
[Fig. 4] montre une combinaison possible de plusieurs modules dans une structure de collecte de lumière qui est conforme à un second aspect de l'invention ;
[Fig. 5a] illustre une application de l'invention à un récepteur de communication optique par faisceau laser ; et
[Fig. 5b] illustre une application de l'invention à un système LIDAR.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques. Par ailleurs, dans toute la présente description, les mots «lumière» et «rayonnement» peuvent être compris comme étant équivalents.

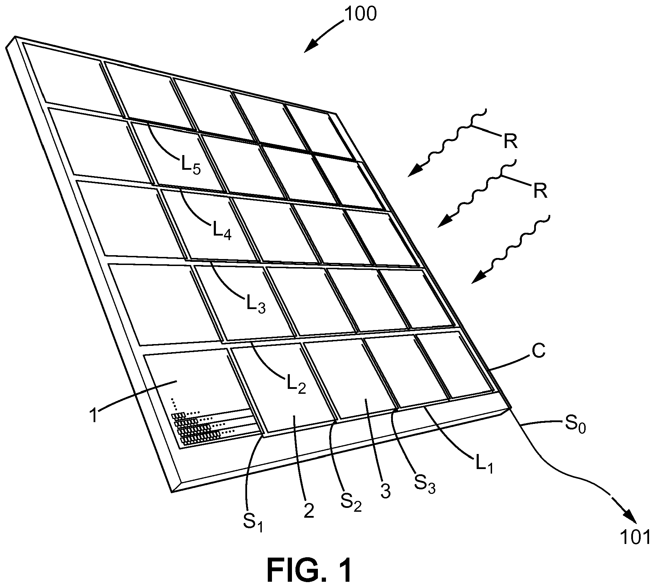

Une structure de collecte de lumière telle que connue avant la présente invention, et à laquelle peuvent être appliqués les différents aspects de l'invention indépendamment les uns des autres, comprend plusieurs modules qui sont regroupés dans un panneau. Chaque module, qui est aussi couramment appelé puce photonique ou «photonic chip» en anglais, ou puce par raccourci, est constitué à partir d'un substrat de circuit optique intégré qui peut avoir une surface de un à plusieurs centaines de centimètres-carrés. Ces puces sont assemblées dans un cadre les unes à côté des autres pour former la structure de collecte de lumière, couramment appelée panneau photonique intégré ou «integrated photonic panel» en anglais, ou panneau par raccourci. Dans [Fig. 1], la référence 100 désigne le panneau, et R désigne la lumière ou du rayonnement à collecter qui est incident sur le panneau 100. Le panneau 100 regroupe vingt-cinq puces à titre d'exemple, juxtaposées les unes aux autres pour former une matrice. Les références 1, 2 et 3 désignent trois de ces puces. Toutes les puces sont identiques et possèdent chacune une sortie optique destinée à transmettre du rayonnement qui est collecté par cette puce. Ainsi, S₁ est la sortie optique de la puce 1, S₂ la sortie optique de la puce 2, S₃ celle de la puce 3, etc. S₀ désigne la sortie optique de l'ensemble du panneau 100. Toutes les sorties optiques des puces S₁, S₂, S₃... sont connectées à la sortie optique S₀ du panneau par des chemins optiques de transfert respectifs, de façon à regrouper toutes les parties de rayonnement qui ont été collectées séparément par les puces et transmettre leur regroupement par la sortie optique S₀ vers un photodétecteur 101. Par exemple, le photodétecteur 101 peut être constitué à partir d'une photodiode. Pour l'exemple qui est représenté dans [Fig. 1], l'ensemble des chemins optiques de transfert qui relient les sorties optiques des puces à la sortie optique du panneau est formé par un guide d'onde principal C, ou guide d'onde de colonne, et cinq guides d'onde secondaires L₁-L₅, ou guides d'onde de lignes, qui sont raccordés au guide d'onde principal C. Toutes les sorties optiques des puces d'une même ligne de la matrice du panneau sont alors raccordées optiquement au guide d'onde de ligne qui est affecté à cette ligne de la matrice. Dans des réalisations possibles du panneau, les guides d'onde C et L₁-L₅ peuvent être constitués par des segments de fibres optiques qui sont connectés entre eux, et connectés aux sorties optiques des puces en amont ainsi qu'à la sortie optique du panneau en aval, par rapport au sens de transfert du rayonnement depuis les puces au photodétecteur.

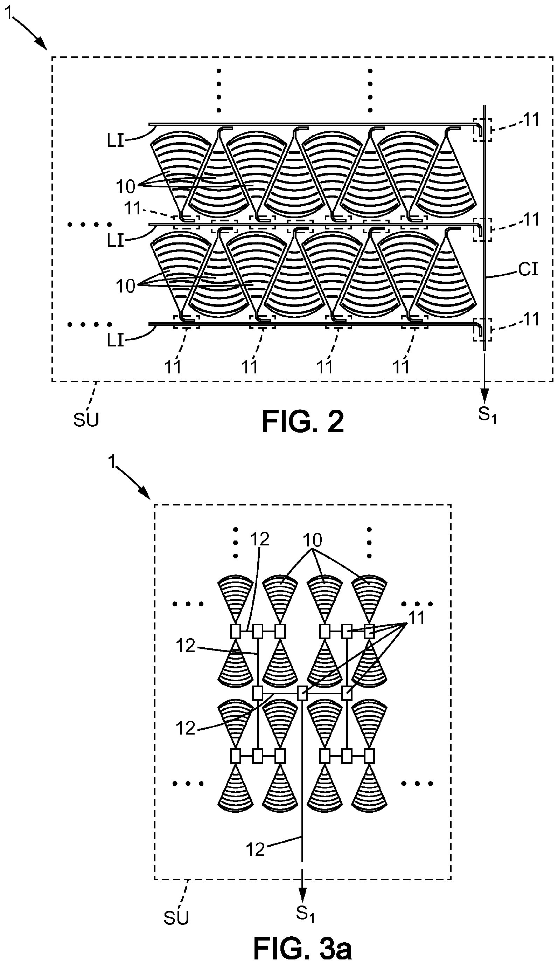

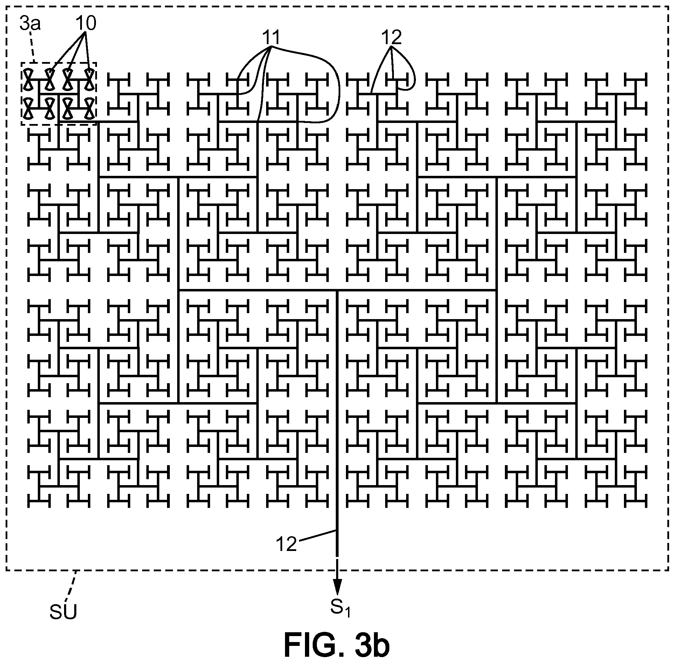

Chaque puce est fabriquée à partir de son substrat, désigné par la référence SU dans [Fig. 2], [Fig. 3a] et [Fig. 3b], selon l'une des technologies connues de l'Homme du métier pour les circuits optiques intégrés. Elle incorpore un grand nombre de collecteurs élémentaires de lumière, couramment appelés nano-antennes ou «nano-antennas» en anglais, ainsi qu'un réseau de guides d'onde intégrés. Typiquement, chaque puce peut incorporer plusieurs dizaines de milliers à plus d'un million de nano-antennes qui sont identiques entre elles. Le réseau de guides d'onde intégrés connecte optiquement chaque nano-antenne à la sortie optique de la puce qui incorpore cette nano-antenne. De cette façon, la partie de rayonnement qui est transmise par la sortie optique de la puce est un regroupement des parties élémentaires de rayonnement qui sont collectées individuellement et séparément par toutes les nano-antennes.

Les nano-antennes peuvent être de différents types, notamment de types connus de l'art antérieur. Un type de nano-antennes utilisable, dit à réseau diélectrique diffractant, est décrit dans l'article déjà cité plus haut et intitulé «Large-scale nanophotonic phased array», de Jie Sun et al., Nature, vol. 493, pp. 195-199, 10 janvier 2013. Un autre type de nano-antennes, qui est utilisable alternativement au précédent, est dit à plasmons et décrit dans le chapitre intitulé «Plasmonic Nanoantenna Array Design», de Tao Dong et al., IntechOpen, accessible par DOI : http://dx.doi.org/10.5772/intechopen.90782, 2020. Typiquement, chaque nano-antenne peut occuper une surface d'un à quelques micromètres-carrés dans le substrat de puce correspondant, en fonction de la longueur d'onde du rayonnement à collecter. La longueur d'onde nominale de fonctionnement du panneau, pour la lumière à collecter, peut être de l'ordre de 1550 nm (nanomètre), par exemple.

Chaque guide d'onde intégré à l'intérieur d'une des puces est réalisé d'une des façons connues de l'Homme du métier, selon la technologie utilisée, et le réseau de ces guides d'onde intégrés est constitué d'un agencement de tels guides d'onde et de coupleurs optiques. Par exemple, ces coupleurs optiques peuvent du type décrit dans l'article intitulé «1x2 Multimode interférence coupler with ulta-low reflections in membrane photonic integrated circuits», de A.J. Millan-Mejia et al., 19th European Conférence on Integrated Optics, 2017. Pour produire un regroupement des parties élémentaires de rayonnement qui sont collectées respectivement par les nano-antennes au sein d'une puce, de tels coupleurs optiques 1x2 sont utilisés dans le sens de 2 entrées vers 1 sortie, afin que des parties de rayonnement qui sont reçues par le coupleur optique sur ses deux entrées soient transmises d'une façon regroupée par sa sortie. Autrement dit, les deux entrées de chaque coupleur optique sont orientées vers les nano-antennes et sa sortie est orientée vers la sortie optique de la puce, selon le sens de transfert du rayonnement à l'intérieur de la puce.

Selon un agencement connu du réseau de guides d'onde à l'intérieur de chaque puce, tel qu'illustré par [Fig. 2] pour la puce 1 prise à titre d'exemple, toutes les nano-antennes de la puce sont réparties en lignes juxtaposées qui constituent une matrice. La référence 10 désigne chaque nano-antenne individuellement, qui est du type à réseau diffractant dans l'exemple représenté. Le réseau de guides d'onde qui est intégré à l'intérieur de chaque puce comprend un guide d'onde de colonne CI, qui est rectiligne, et des guides d'onde de lignes Ll, qui sont aussi rectilignes. Chaque guide d'onde de ligne Ll est couplé optiquement à une de ses extrémités au guide d'onde de colonne CI par un coupleur optique 11, et le guide d'onde de colonne CI débouche à la sortie optique de la puce, S₁ pour la puce 1. Chaque nano-antenne 10 est couplée optiquement à l'un des guides d'onde de ligne LI par un coupleur optique respectif 11. Selon différentes variantes d'agencement, les nano-antennes 10 d'une même ligne peuvent toutes être couplées à un des guides d'onde de ligne LI qui est dédié à cette ligne, ou bien être couplées alternativement à un de deux guides d'onde de ligne LI qui sont adjacents à cette ligne de nano-antennes. De façon connue, pour un tel agencement de réseau de guides d'onde, les pertes de rayonnement qui sont provoquées individuellement par chaque coupleur optique 11 se cumulent additivement, de sorte que la perte totale est sensiblement proportionnelle au nombre de nano-antennes dans la puce.

Un aspect de l'invention consiste à remplacer l'agencement du réseau de guides d'onde intégrés de [Fig. 2], pour l'intérieur de chaque puce, par un agencement fractal, par exemple tel que représenté dans [Fig. 3a] et [Fig. 3b]. Le réseau de guides d'onde qui est intégré à l'intérieur de chaque puce comprend maintenant un agencement fractal de segments de guides d'onde 12 qui sont reliés par des coupleurs optiques 11. Les coupleurs optiques 11 peuvent encore être du type à 2 entrées et 1 sortie comme précédemment, mais l'ensemble des segments de guides d'onde 12 est constitué par des répétitions d'un même motif fractal de connexion à au moins trois niveaux d'échelle différents. Dans l'exemple représenté, le motif fractal de connexion qui est utilisé possède une forme géométrique en H, avec liaison entre motifs qui appartiennent à des niveaux d'échelle successifs par le milieu du segment central de chaque motif en H. Chaque segment de motif en H est constitué par un segment de guide d'onde 12. La puce représentée dans [Fig. 3b] comporte huit niveaux d'échelle dans l'agencement fractal du réseau de guides d'onde, à titre d'exemple non-limitatif. Les segments de traits qui apparaissent dans cette figure correspondent à des segments de guides d'onde 12, et les embranchements à trois segments correspondent aux coupleurs optiques 11. L'encart qui est référencé 3a dans [Fig. 3b] correspond au contenu de [Fig. 3a], et les nano-antennes 10 y sont représentées par des secteurs angulaires. Par souci de clarté de [Fig. 3b], les nano-antennes n'ont pas été représentées à l'extérieur de cet encart. D'autres motifs fractals peuvent être utilisés alternativement, y compris en utilisant des coupleurs optiques qui ont chacun plus de deux entrées. Alors, lorsque le réseau de guides d'onde à l'intérieur de chaque puce possède un agencement fractal, les pertes de rayonnement qui sont provoquées individuellement par chaque coupleur optique 11 se combinent de sorte que la perte totale soit sensiblement proportionnelle au logarithme du nombre de nano-antennes dans la puce. Etant donné que chaque puce comporte un très grand nombre de nano-antennes, l'utilisation d'un agencement fractal pour le réseau de guides d'onde au sein de chaque puce permet une réduction importante des pertes de rayonnement qui se produisent dans ce réseau. A titre d'illustration numérique, pour une puce carrée de 2 cm de côté qui comporte 4096 nano-antennes, chacune à réseau diélectrique diffractant ayant une plus grande dimension d'environ 150 µm (micromètre), et qui possède l'agencement fractal en H pour son réseau de guides d'onde intégrés, cette puce transmet à sa sortie optique environ 10% de la puissance du rayonnement qui est incident sur l'ensemble de sa surface. Plus précisément, un facteur de remplissage surfacique de la puce par les nano-antennes d'environ 50% est réalisé, et le trajet de connexion optique de chaque nano-antenne à la sortie optique de la puce possède une longueur d'environ 4 cm en comportant douze coupleurs optiques. La partie principale des pertes de rayonnement dans chaque puce se produit dans les coupleurs optiques.

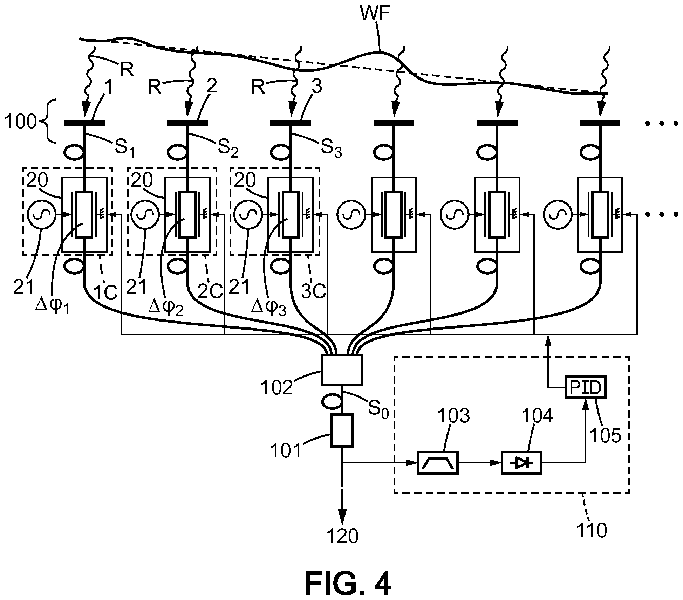

Un autre aspect de l'invention concerne le regroupement des parties de rayonnement qui sont collectées séparément par les puces 1, 2, 3... pour être transmises simultanément au photodétecteur 101. Le chemin optique de transfert qui réalise cette transmission pour chaque puce peut avoir un agencement quelconque, y compris avec des parties de chemin optique de transfert qui sont partagées entre plusieurs puces, comme cela est le cas pour le panneau de [Fig. 1]. Mais selon l'autre aspect de l'invention qui est décrit maintenant, le chemin optique de transfert qui relie chaque puce au photodétecteur 101 comprend au moins une partie de chemin qui est dédiée à cette puce, si bien qu'il est possible de considérer en première approximation que chaque puce est reliée au photodétecteur 101 par un chemin optique de transfert qui lui est dédié. En particulier, lorsque cette partie de chemin optique de transfert qui est dédiée à chaque puce du panneau comporte un modulateur de phase et des composants associés à ce modulateur, ce modulateur et ses composants associés sont effectifs pour le chemin optique de transfert qui relie la puce au photodétecteur, et peuvent donc être considérés indépendamment des autres puces et de leurs chemins optiques de transfert respectifs. Ainsi, la configuration représentée dans [Fig. 4] est utilisée, où le chemin optique de transfert 1C relie la sortie optique S₁ de la puce 1 à une première entrée d'un coupleur optique principal 102, le chemin optique de transfert 2C relie la sortie optique S₂ de la puce 2 à une deuxième entrée du coupleur optique principal 102, le chemin optique de transfert 3C relie la sortie optique S₃ de la puce 3 à une troisième entrée du coupleur optique principal 102, etc. Le coupleur optique principal 102 combine les parties de rayonnement qu'il reçoit à toutes ses entrées en un rayonnement de combinaison qui est transmis par sa sortie S₀ au photodétecteur 101. L'amplitude instantanée de ce rayonnement de combinaison est une somme des amplitudes complexes respectives des parties de rayonnement qui sont issues séparément de tous les chemins optiques de transfert 1C, 2C, 3C... Elle est maximale, de même que la puissance lumineuse qui est reçue par le photodétecteur 101, lorsque toutes les parties de rayonnement issues des chemins optiques de transfert sont en phase. La liaison optique entre la sortie S₀ du coupleur optique principal 102 et le photodétecteur 101 peut être constituée par un segment de fibre optique.

Or des déphasages peuvent exister entre les parties de rayonnement qui sont issues de tous les chemins optiques de transfert 1C, 2C, 3C..., avec des causes variables. Ces déphasages réduisent l'amplitude instantanée du rayonnement de combinaison qui est reçu par le photodétecteur 101. Un but est de l'aspect présent de l'invention est de compenser automatiquement ces déphasages, quelle que soit leur cause, pour que la puissance lumineuse qui parvient au photodétecteur 101 soit maximale.

Une première cause de déphasages peut résulter de l'assemblage de chaque puce 1, 2, 3... dans le cadre du panneau 100, lorsque des puces différentes présentent des décalages de montage les unes par rapport aux autres, mesurés selon une direction qui est perpendiculaire au panneau. Les déphasages qui en résultent pour les parties de rayonnement collectées par toutes les puces sont fixes, et peuvent être compensés par l'aspect de l'invention qui est décrit maintenant.

Une deuxième cause de déphasages peut être une inclinaison de la direction de propagation du rayonnement R à collecter lorsqu'il est incident sur le panneau 100. En effet, la partie du rayonnement collectée par celle des puces qui est située contre le bord du panneau 100 du côté de l'inclinaison de la direction de propagation du rayonnement possède une avance de phase par rapport à une autre partie du rayonnement collectée par la puce qui est située à l'opposé dans le panneau 100. De tels déphasages, lorsqu'ils sont déterminés selon l'invention, peuvent constituer une mesure de la direction d'incidence du rayonnement R.

Enfin, une troisième cause de déphasages peut être la traversée d'une portion d'atmosphère par le rayonnement R qui parvient au panneau 100. Tel est le cas lorsque le panneau 100 est utilisé dans une station de réception terrestre, ou à bord d'un aérodyne. Un front d'onde du rayonnement présente alors des déformations aléatoires, de sorte qu'il arrive au niveau de toutes les puces à des instants respectifs qui sont décorrélés de la direction d'incidence moyenne du rayonnement R. Dans [Fig. 4], WF désigne un tel front d'onde du rayonnement R après qu'il a traversé une portion d'atmosphère.

Selon le présent aspect de l'invention, chacun des chemins optiques de transfert 1C, 2C, 3C... comprend un modulateur de phase 20 et une source électrique de signal de modulation 21 qui est connectée à une entrée de modulation du modulateur de phase. Ainsi, la partie de rayonnement qui est collectée par chacune des puces 1, 2, 3... est transmise au coupleur optique principal 102 en étant affectée d'un déphasage supplémentaire qui est produit par le modulateur de phase correspondant. Δϕ₁ désigne le déphasage supplémentaire qui est ainsi produit par le modulateur de phase 20 du chemin optique de transfert 1C, Δϕ₂ désigne le déphasage supplémentaire qui est produit de façon similaire par le modulateur de phase 20 du chemin optique de transfert 2C, de même Δϕ₃ pour le chemin optique de transfert 3C, etc. Chaque modulateur de phase peut être d'un type à portion de niobiate de lithium (LiNb), connu de l'Homme du métier, et dans ce cas tous les modulateurs de phase 20 peuvent être regroupés dans un même circuit optique intégré qui est connecté vers l'amont aux sorties optiques S₁, S₂, S₃... respectives des puces 1, 2, 3... par des segments respectifs de fibres optiques, et vers l'aval aux entrées du coupleur optique principal 102. Possiblement, ce coupleur optique principal 102 peut aussi être incorporé dans le circuit optique intégré des modulateurs de phase 20.

Alors, le panneau 100 peut être muni de moyens qui sont adaptés pour rechercher automatiquement les valeurs des déphasages supplémentaires Δϕ₁, Δϕ₂, Δϕ₃... à produire par les modulateurs 20 pour compenser les déphasages qui existent entre les parties de rayonnement collectées séparément par toutes les puces 1, 2, 3... Un tel problème technique de resynchronisation de multiples signaux les uns par rapport aux autres est connu par ailleurs, notamment dans le domaine des radars à synthèse d'ouverture, et l'Homme du métier saura transposer les méthodes connues pour cela au cas présent de la structure collectrice de lumière.

Par exemple, chaque source électrique 21 peut être conçue pour varier le signal de modulation qu'elle transmet au modulateur 20 auquel elle est connectée, afin de varier la valeur du déphasage supplémentaire qui est produit par cette dernière. Notamment, chaque source électrique 21 peut commander des variations périodiques du déphasage qui est produit par le modulateur 20 auquel elle est connectée, à une fréquence fixe qui est différente de la fréquence de chacune des autres sources électriques 21. La fréquence des variations du déphasage qui sont produites ainsi dans chacun des chemins optiques de transfert 1C, 2C, 3C... peut être de l'ordre de 10 MHz. De cette façon, toutes les combinaisons de valeurs pour les déphasages Δϕ₁, Δϕ₂, Δϕ₃... sont appliquées une-à-une, et celles qui remettent en phase les unes par rapport aux autres plusieurs des parties de rayonnement issues de puces différentes génèrent un signal de détection pour le photodétecteur 101 qui est plus important. La combinaison de valeurs pour les déphasages Δϕ₁, Δϕ₂, Δϕ₃... qui produit le signal de détection maximal pour le photodétecteur 101 est celle qui resynchronise toutes les parties de rayonnement issues des puces 1, 2, 3... du panneau 100 les unes par rapport aux autres. La durée pendant laquelle toutes les sources électriques 21 produisent un balayage des combinaisons de valeurs pour tous les déphasages Δϕ₁, Δϕ₂, Δϕ₃... est désignée par séquence de recherche de synchronisation. Elle peut être de l'ordre de quelques microsecondes, en fonction du nombre des puces dans le panneau 100. Pendant la séquence de recherche de synchronisation, plusieurs stratégies de balayage des combinaisons de valeurs pour les déphasages Δϕ₁, Δϕ₂, Δϕ₃... peuvent être mises en oeuvre alternativement, qui sont connues de l'Homme du métier. Chacune de ces stratégies peut constituer un compromis différent entre exhaustivité de la recherche et vitesse pour trouver des valeurs pour les déphasages Δϕ₁, Δϕ₂, Δϕ₃... qui réalisent une synchronisation partielle ou totale. Lorsque la structure de collecte de lumière est utilisée pour un récepteur de communication optique par faisceau laser, la séquence de recherche de synchronisation correspond sensiblement à la phase de ralliement qui est mise en oeuvre à l'établissement d'une nouvelle session de communication. Pendant cette séquence de recherche de synchronisation, le signal de détection qui est produit par le photodétecteur 101 est filtré par un filtre 103 (voir [Fig. 4]) puis analysé par un détecteur de seuil 104 qui identifie une combinaison de valeurs de déphasages si elle correspond à un maximum du signal de détection qui est suffisamment important. La quantification du signal de détection, utilisée pour la recherche de synchronisation qui vient d'être décrite, est couramment appelée score de battement, ou «beatnote» en anglais. Lorsqu'un maximum qui est suffisamment élevé est détecté pour le signal de détection, la séquence de recherche de synchronisation est interrompue. La synchronisation obtenue peut n'être que partielle tout en étant suffisante, c'est-à-dire qu'elle resynchronise un nombre de puces du panneau 100 qui est suffisamment important, bien que quelques puces puissent rester déphasées par rapport au plus grand nombre d'elles. Pendant la séquence de recherche de synchronisation, les maxima du score de battement apparaissent typiquement à une fréquence de l'ordre 10 kHz.

La combinaison des déphasages Δϕ₁, Δϕ₂, Δϕ₃... qui correspond à un maximum du signal de détection est sélectionnée, puis appliquée aux chemins optiques de transfert 1C, 2C, 3C... pendant une durée de collecte de lumière. Par exemple, des valeurs discrètes sont utilisées pour tous les déphasages Δϕ₁, Δϕ₂, Δϕ₃... , et les combinaisons de ces valeurs qui sont appliquées successivement pendant la séquence de recherche de synchronisation sont mémorisées, puis celle du maximum du signal de détection tel que délivré par le photodétecteur 101 est récupérée dans la mémoire.

Selon différents modes de fonctionnement, la séquence de recherche de synchronisation peut être répétée après une durée prédéterminée de collecte de lumière. Par exemple, la séquence de recherche de synchronisation peut être répétée périodiquement, selon une fréquence de répétition qui peut être comprise entre 1 kHz et 1 MHz, typiquement de 100 kHz. Une telle fréquence de répétition est notamment suffisamment élevée pour compenser des perturbations atmosphériques qui affectent le rayonnement R à collecter. Un tel mode de fonctionnement est de type à boucle ouverte.

Selon un mode de fonctionnement alternatif, dit à boucle fermée, le niveau du signal de détection peut être mesuré répétitivement ou surveillé en continu pendant la période de collecte de lumière, et lorsqu'il devient inférieur à un seuil prédéterminé, par exemple 50% de son niveau au début de cette période de collecte de lumière, une nouvelle séquence de recherche de synchronisation est déclenchée. Puis une nouvelle période de collecte de lumière est débutée à partir des valeurs des déphasages fournies par la nouvelle séquence de recherche de synchronisation. Pour un tel fonctionnement en boucle fermée, la nouvelle séquence de recherche de synchronisation peut être effectuée à partir des valeurs des déphasages Δϕ₁, Δϕ₂, Δϕ₃... fournies par la séquence de recherche de synchronisation précédente, ou fournies successivement par les n précédentes séquences de recherche de synchronisation, n étant un nombre entier positif, par exemple inférieur à huit. Pour cette raison, [Fig. 4] montre un module de rétroaction 105, noté PID pour proportionnel-intégral-différentiel, qui relie symboliquement le détecteur de seuil 104 à une entrée d'initialisation du couple formé par le modulateur de phase 20 et la source électrique 21 de chacun des chemins optiques de transfert 1C, 2C, 3C...

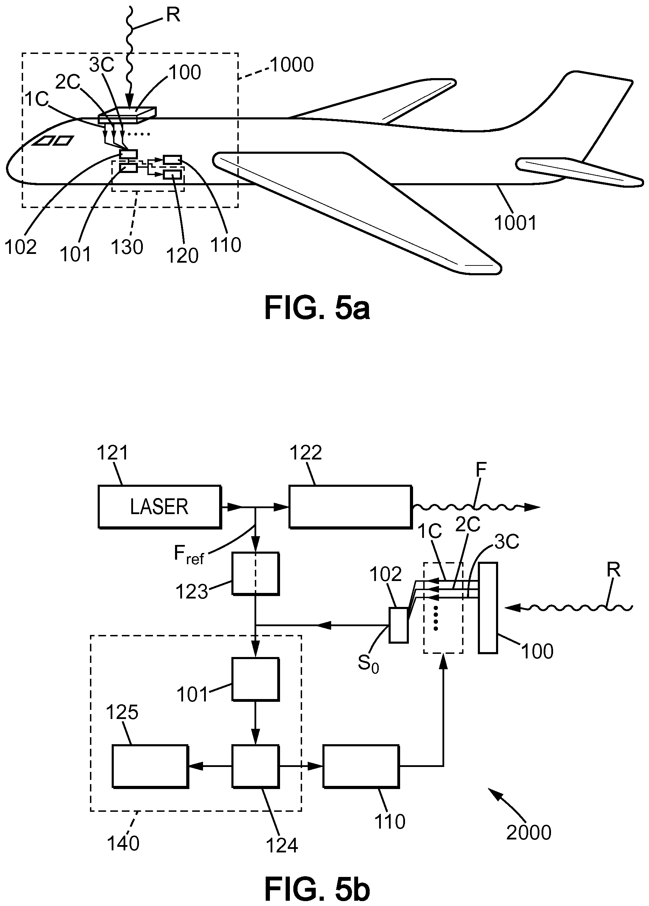

Des premières applications possibles pour des structures de collecte de lumière telles que décrites en référence à [Fig. 1]-[Fig. 4] sont des récepteurs de communication optique par faisceau laser, notamment de tels récepteurs qui sont embarqués à bord d'avions. En effet, la forme générale plane et peu épaisse du panneau 100 est particulièrement favorable pour qu'il soit intégré au fuselage d'un avion, en étant exposé à l'extérieur mais sans perturber significativement l'écoulement d'air autour de l'avion. De cette façon, des communications optiques peuvent être établies entre l'avion et un satellite, par exemple pour fournir une liaison internet à des passagers de l'avion. Pour cela, le panneau 100 et le système de synchronisation représenté dans [Fig. 4] sont associés avec une section de traitement et décodage 120, cette dernière étant adaptée pour extraire des données à partir de modulations du rayonnement R qui est collecté par le panneau 100. Au sens de la partie générale de la présente description, le photodétecteur 101 et la section de traitement et de décodage 120 constituent ensemble une voie de détection et de traitement. Les modulations du rayonnement R qui sont utiles pour transmettre des données peuvent être des modulations d'intensité ou de phase, avec une fréquence de modulation qui peut être supérieure à 1 GHz (gigahertz) ou supérieure à 1 Gbps (gigabit par seconde). De telles valeurs de fréquence de modulation sont très supérieures à des fréquences de fonctionnement du système de maintien de la synchronisation, si bien que des séquences de recherche de synchronisation peuvent être exécutées pendant que du signal utile continue à être reçu. Il est ainsi possible d'ajuster la synchronisation des puces pendant la réception du signal utile, correspondant à une phase de poursuite dans le jargon des communications optiques. L'application des déphasages qui ont été sélectionnés à l'issue d'une phase de recherche de synchronisation correspond alors sensiblement au pointage de la direction de réception qui est exécuté au début de chaque phase de poursuite. [Fig. 5a] illustre une telle application de l'invention à un récepteur de communication optique par faisceau laser qui est embarqué à bord d'un avion. Les références dans cette figure ont les significations suivantes :
- 1000: le récepteur de communication optique par faisceau laser,
- 1001: l'avion,
- 100: le panneau tel que décrit en référence à [Fig. 3a] et [Fig. 3b],
- 1C, 2C,: 3C... les chemins optiques de transfert tels que décrits en référence à [Fig. 4],
- 110: l'ensemble de recherche de synchronisation comprenant notamment le filtre 103, le détecteur de seuil 104 et le module de rétroaction 105,
- 120: la section de traitement et décodage,
- 130: la voie de détection et traitement citée plus haut.

Des secondes applications possibles pour des structures de collecte de lumière telles que décrites en référence à [Fig. 1]-[Fig. 4] sont des systèmes LIDAR. Conformément à [Fig. 5b], un tel système LIDAR qui est désigné globalement par la référence 2000, comprend une source laser 121, et une voie d'émission 122. La voie d'émission 122 comprend au moins un modulateur et un amplificateur optique, et est conçue pour émettre un faisceau F d'impulsions lumineuses en direction d'une cible (non-représentée). Une voie de réception de ce système peut comprendre une structure de collecte de lumière qui est conforme à l'invention, incluant le panneau 100, les chemins optiques de transfert 1C, 2C, 3C..., le coupleur optique principal 102 et le photodétecteur 101. Une partie F_{ref} du faisceau laser qui est produit par la source 121 est mélangée au rayonnement qui est transmis à sa sortie S₀ par le coupleur optique principal 102. Ainsi, la voie de réception collecte une partie R du faisceau F qui a été rétroréfléchie par la cible, et le mélange des parties de faisceau R et F_{ref} permet une détection hétérodyne de la partie de faisceau rétroréfléchie R. La référence 124 désigne un commutateur électrique qui oriente le signal de détection qui est produit par le photodétecteur 101 soit vers une chaîne de traitement et d'analyse 125, soit vers l'ensemble de recherche de synchronisation 110. La chaîne de traitement et d'analyse 125 est adaptée pour déduire une évaluation de la distance d'éloignement à laquelle se trouve la cible par rapport au système LIDAR, et éventuellement aussi une évaluation d'une vitesse de cette cible. Au sens de la partie générale de la présente description, le photodétecteur 101, le commutateur électrique 124 et la chaîne de traitement et d'analyse 125 constituent une voie de détection et de traitement LIDAR, désignée par la référence 140. Pour effectuer des mesures utiles, le commutateur optique 123 transmet la partie de faisceau laser F_{ref} de la voie d'émission en direction du photodétecteur 101, en même temps que le commutateur électrique 124 transmet le signal de détection à la chaîne de traitement et d'analyse 125. Pendant une séquence de recherche de synchronisation, exécutée comme décrit plus haut pour synchroniser les unes par rapport aux autres toutes les parties du faisceau rétroréfléchi R qui sont collectées séparément par les puces du panneau 100, le commutateur optique 123 est dans un état de non-transmission, si bien que le photodétecteur 101 ne reçoit que le rayonnement qui est collecté par le panneau 100. Le commutateur électrique 124 transmet alors le signal de détection à l'ensemble de recherche de synchronisation 110.

Il est rappelé que les deux aspects d'invention qui concernent d'une part l'agencement fractal au sein de chaque puce du panneau, et d'autre part la synchronisation des rayonnements qui sont collectés par toutes les puces de ce panneau, peuvent être mis en oeuvre séparément l'un de l'autre, ou en combinaison l'un avec l'autre.

En outre, il est entendu que tous les aspects d'invention qui ont été décrits peuvent être reproduits en modifiant des détails secondaires, tout en conservant certains au moins des avantages cités. Notamment, une structure de collecte de lumière telle que décrite peut être utilisée pour d'autres applications que des récepteurs de communication optique par faisceau laser et des systèmes LIDAR. De plus, toutes les valeurs numériques qui ont été citées ne l'ont été qu'à titre d'illustration, et peuvent être changées en fonction de l'application considérée.

Enfin, il est indiqué qu'une structure de collecte de lumière qui est conforme à l'invention peut aussi être utilisée pour émettre un faisceau de lumière, lorsqu'elle est alimentée par une source lumineuse. Pour cela, un faisceau de lumière qui est issu de cette source est divisé en plusieurs parties de faisceau qui sont transmises respectivement aux modules de la structure. Alors, à l'intérieur de chaque module, la lumière se propage dans un sens allant de la sortie optique de ce module vers les collecteurs élémentaires de lumière, ces derniers fonctionnant alors en émetteurs élémentaires de lumière.

## Revendications

1. Structure (100) pour collecter de la lumière, comprenant plusieurs modules (1, 2, 3...), et chaque module comprenant :
- un substrat (SU) ;
- des collecteurs élémentaires de lumière (10) qui sont juxtaposés sur le substrat (SU) ; et
- un réseau de guides d'onde (12) qui est porté par le substrat (SU), et qui connecte optiquement chaque collecteur élémentaire de lumière (10) du module (1, 2, 3...) à une sortie optique (S₁, S₂, S₃...) dudit module, de sorte que lorsqu'un faisceau de lumière est incident sur la structure (100), une partie élémentaire du faisceau qui est collectée par l'un quelconque des collecteurs élémentaires de lumière du module soit transmise à ladite sortie optique du module par l'intermédiaire du réseau de guides d'onde,
structure (100) dans laquelle, pour chaque module (1, 2, 3...), le réseau de guides d'onde (12) possède un agencement fractal de division entre la sortie optique (S₁, S₂, S₃...) et les collecteurs élémentaires de lumière (10) dudit module, selon un sens d'observation allant de ladite sortie optique vers les collecteurs élémentaires de lumière,
la structure (100) comprend en outre un coupleur optique principal (102) à plusieurs entrées et à une seule sortie (S₀), la sortie optique (S₁, S₂, S₃...) de chaque module (1, 2, 3...) étant connectée optiquement à une des entrées dudit coupleur optique principal séparément des autres modules par un chemin optique de transfert (1C, 2C, 3C...) respectif qui comprend un modulateur de phase (20),
et la structure (100) comprend en outre, pour chaque modulateur de phase (20), une source électrique de signal de modulation (21) qui est connectée à une entrée de modulation dudit modulateur de phase, de sorte que les chemins optiques de transfert (1C, 2C, 3C...) transmettent au coupleur optique principal (102) des parties respectives du faisceau de lumière incident sur la structure, conformément à des déphasages qui sont produits par les modulateurs de phase,
les sources électriques des signaux de modulation (21) étant agencées pour, lors d'une séquence de recherche de synchronisation, varier simultanément tous les déphasages de façon à balayer des combinaisons variables de valeurs pour tous lesdits déphasages,
et la structure (100) étant **caractérisée** qu'elle comprend en outre :
- un système de détection de synchronisation, qui est agencé pour détecter, pendant la séquence de recherche de synchronisation, un instant de synchronisation auquel la sortie (S₀) du coupleur optique principal (102) transmet une puissance lumineuse qui est maximale ; et
- un système de sélection, qui est adapté pour sélectionner les valeurs des déphasages telles qu'existantes à l'instant de synchronisation, et pour commander, après une interruption de la séquence de recherche de synchronisation, un fonctionnement des sources électriques des signaux de modulation (21) pour lequel les déphasages produits par les modulateurs de phase (20) sont conformes aux valeurs sélectionnées.

2. Structure (100) selon la revendication 1, dans laquelle les collecteurs élémentaires de lumière (10) et les réseaux de guides d'onde (12) des modules (1, 2, 3...) sont conçus pour être efficaces lorsque le faisceau de lumière qui est incident sur la structure appartient à un intervalle spectral d'efficacité de ladite structure pour collecter la lumière, et chaque collecteur élémentaire possède des dimensions qui sont plus petites que trois fois une longueur d'onde quelconque de l'intervalle spectral d'efficacité de ladite structure.

3. Structure (100) selon la revendication 1 ou 2, dans laquelle l'agencement fractal de division du réseau de guides d'onde (12) de l'un au moins des modules (1, 2, 3...) comprend des coupleurs optiques (11) chacun à plusieurs entrées et une sortie, qui appartiennent à des niveaux de division successifs comptés à partir de la sortie optique (S₁, S₂, S₃...) du module, avec ladite sortie optique du module qui est connectée optiquement à la sortie d'un des coupleurs optiques qui constitue un premier des niveaux de division, et chaque sortie d'un coupleur optique qui appartient à un des niveaux de division supérieurs audit premier niveau est connectée par un segment respectif de guide d'onde à une des entrées d'un coupleur optique du niveau précédent, jusqu'aux collecteurs élémentaires de lumière (10) qui sont connectés optiquement chacun à une entrée d'un des coupleurs optiques.

4. Structure (100) selon la revendication 3, dans laquelle l'agencement fractal de division du réseau de guides d'onde (12) de l'un au moins des modules (1, 2, 3...), comprenant les coupleurs optiques (11) et des segments de guides d'onde, constitue des motifs géométriques en forme de H sur le substrat dudit module.

5. Structure (100) selon l'une quelconque des revendications précédentes, dans laquelle chaque module (1, 2, 3...) comporte au moins 10.000 collecteurs élémentaires de lumière (10) qui sont connectés optiquement à la sortie optique (S₁, S₂, S₃...) dudit module par le réseau de guides d'onde (12) à agencement fractal.

6. Structure (100) selon l'une quelconque des revendications précédentes, dans laquelle chaque source électrique de signal de modulation (21) est adaptée pour varier le déphasage produit par le modulateur de phase (20) correspondant selon une fréquence qui est comprise entre 10 kHz et 1 MHz.

7. Structure (100) selon l'une quelconque des revendications précédentes, dans laquelle chaque modulateur de phase (20) est d'un type à portion de niobiate de lithium.

8. Structure (100) selon l'une quelconque des revendications précédentes, adaptée pour répéter périodiquement la séquence de recherche de synchronisation et pour activer le système de sélection à l'issue de chaque séquence de recherche de synchronisation,
ou bien le système de détection de synchronisation est adapté en outre pour détecter, au cours d'un fonctionnement de collecte de lumière par la structure à partir d'une dernière exécution de la séquence de recherche de synchronisation, une réduction de la puissance lumineuse qui est transmise par la sortie (S₀) du coupleur optique principal (102), et pour commander, lorsqu'une telle réduction est détectée, une modification des valeurs des déphasages qui est appropriée pour restituer au moins en partie la puissance lumineuse maximale à ladite sortie du coupleur optique principal.

9. Récepteur optique de communication par faisceau laser (1000), comprenant :
- une structure (100) conforme à l'une quelconque des revendications 1 à 8 ; et
- une voie de détection et traitement (130), adaptée pour extraire d'un rayonnement qui est transmis à ladite voie de détection et traitement, des données qui sont encodées sous forme de modulations du rayonnement,
le récepteur (1000) étant agencé de sorte que, lors d'un fonctionnement dudit récepteur et lorsque la structure (100) collecte une portion de faisceau laser en provenance d'un terminal de communication optique par faisceau laser qui est externe audit récepteur, ladite structure transmette la portion collectée du faisceau laser à la voie de détection et traitement (130).

10. Récepteur (1000) selon la revendication 9, dans lequel chaque module (1, 2, 3...) possède des dimensions inférieures à 10 cm, de sorte que lorsque la portion du faisceau laser qui est collectée traverse une portion d'atmosphère, des déviations de front d'onde de ladite portion du faisceau laser qui sont causées par des fluctuations atmosphériques sont compensées à l'issue d'une exécution de la séquence de recherche de synchronisation.

11. Système LIDAR (2000) comprenant :
- une source laser (121) ;
- une voie d'émission (122), agencée pour émettre, lors d'un fonctionnement du système LIDAR (2000), un rayonnement issu de la source laser en direction d'au moins une cible qui est externe audit système LIDAR ;
- une structure (100) conforme à l'une quelconque des revendications 1 à 8 ; et
- une voie de détection et traitement LIDAR (140), adaptée pour fournir à partir d'un rayonnement qui est transmis à ladite voie de détection et traitement LIDAR, des évaluations de position et/ou de vitesse relatives à ladite au moins une cible,
dans lequel la structure (100) est disposée pour, lors du fonctionnement du système LIDAR (2000), collecter une partie du rayonnement qui a été émis par la voie d'émission (122) puis réfléchi ou rétrodiffusé par ladite au moins une cible, et pour transmettre la partie collectée du rayonnement à la voie de détection et traitement LIDAR (140).

## Patentansprüche

1. Struktur (100) zum Sammeln von Licht, aufweisend mehrere Module (1, 2, 3 ...), wobei jedes Modul aufweist:
- ein Substrat (SU);
- elementare Lichtsammler (10), die nebeneinander auf dem Substrat (SU) angeordnet sind; und
- ein von dem Substrat (SU) getragenes Wellenleiternetz (12), das jeden elementaren Lichtsammler (10) des Moduls (1, 2, 3 ...) mit einem optischen Ausgang (S₁, S₂, S₃ ...) des Moduls optisch verbindet, so dass, wenn ein Lichtbündel auf der Struktur (100) auftrifft, ein elementarer Teil des Bündels, der von irgendeinem der elementaren Lichtsammler des Moduls gesammelt wird, via das Wellenleiternetz zu dem optischen Ausgang weitergeleitet wird,
wobei in der Struktur (100) für jedes Modul (1, 2, 3 ...) das Wellenleiternetz (12) eine fraktale Aufteilungsanordnung zwischen dem optischen Ausgang (S₁, S₂, S₃ ...) und den elementaren Lichtsammlern (10) des Moduls in einer von dem optischen Ausgang zu den elementaren Lichtsammlern betrachteten Richtung aufweist,
die Struktur (100) ferner einen optischen Hauptkoppler (102) mit mehreren Eingängen und einem einzigen Ausgang (S₀) aufweist, wobei der optische Ausgang (S₁, S₂, S₃ ...) jedes Moduls (1, 2, 3 ...), separat von den anderen Modulen, via einen jeweiligen optischen Übertragungspfad (1C, 2C, 3C ...), der einen Phasenmodulator (20) aufweist, mit einem der Eingänge des optischen Hauptkopplers optisch verbunden ist,
und ferner die Struktur (100) für jeden optischen Phasenmodulator (20) eine elektrische Modulationssignalquelle (21) aufweist, die mit einem Modulationseingang des Phasenmodulators verbunden ist, so dass die optischen Übertragungspfade (1C, 2C, 3C ...) jeweilige Teile des auf der Struktur auftreffenden Lichtbündels mit entsprechenden Phasenverschiebungen, die von den Phasenmodulatoren erzeugt werden, zu dem optischen Hauptkoppler (102) weiterleiten,
wobei die elektrischen Modulationssignalquellen (21) konfiguriert sind, um bei einer Synchronisationssuchsequenz gleichzeitig alle Phasenverschiebungen zu variieren, um so variable Wertekombinationen für alle Phasenverschiebungen zu durchsuchen, und die Struktur (100) **dadurch gekennzeichnet ist, dass** sie ferner aufweist:
- ein Synchronisationsdetektionssystem, das konfiguriert ist, um während der Synchronisationssuchsequenz einen Synchronisationsmoment zu detektieren, in dem der Ausgang (S₀) des optischen Hauptkopplers (102) eine Lichtstärke, die maximal ist, weiterleitet; und
- ein Auswahlsystem, das angepasst ist, die Werte der Phasenverschiebungen, wie sie in dem Synchronisationsmoment vorhanden sind, auszuwählen und nach einer Unterbrechung der Synchronisationssuchsequenz einen Betrieb der elektrischen Modulationssignalquellen (21) zu steuern, für den die von den Phasenmodulatoren (20) erzeugten Phasenverschiebungen den ausgewählten Werten entsprechen.

2. Struktur (100) nach Anspruch 1, in welcher die elementaren Lichtsammler (10) und die Wellenleiternetze (12) der Module (1, 2, 3 ...) konzipiert sind, effizient zu sein, wenn das Lichtbündel, das auf der Struktur auftrifft, einem zum Sammeln des Lichts effizienten Spektralintervall der Struktur angehört, und jeder elementare Sammler Abmessungen hat, die kleiner sind als das Dreifache einer beliebigen Wellenlänge des effizienten Spektralintervalls der Struktur.

3. Struktur (100) nach Anspruch 1 oder 2, in welcher die fraktale Aufteilungsanordnung des Wellenleiternetzes (12) mindestens eines der Module (1, 2, 3 ...) optische Koppler (11) mit jeweils mehreren Eingängen und einem einzigen Ausgang aufweist, die aufeinanderfolgenden Aufteilungsebenen, von dem optischen Ausgang (S₁, S₂, S₃ ...) des Moduls ausgehend gezählt, angehören, wobei der optische Ausgang des Moduls mit dem Ausgang eines der optischen Koppler, der eine erste Aufteilungsebene bildet, optisch verbunden ist und jeder Ausgang eines optischen Kopplers, der einer der bezüglich der ersten Ebene höheren Aufteilungsebenen angehört, via ein jeweiliges Wellenleitersegment mit einem der Eingänge eines optischen Kopplers der vorausgehenden Ebene verbunden ist, bis hin zu den elementaren Lichtsammlern (10), die jeweils mit einem Eingang eines der optischen Koppler verbunden sind.

4. Struktur (100) nach Anspruch 3, in welcher die fraktale Aufteilungsanordnung des Wellenleiternetzes (12) mindestens eines der Module (1, 2, 3 ...), das die optischen Koppler (11) und die Wellenleitersegmente aufweist, H-förmige geometrische Motive auf dem Substrat des Moduls bildet.

5. Struktur (100) nach einem der vorstehenden Ansprüche, in welcher jedes Modul (1, 2, 3 ...) mindestens 10.000 elementare Lichtsammler (10) aufweist, die via das Wellenleiternetz (12) fraktaler Anordnung mit dem optischen Ausgang (S₁, S₂, S₃ ...) des Moduls optisch verbunden sind.

6. Struktur (100) nach einem der vorstehenden Ansprüche, in welcher jede elektrische Modulationssignalquelle (21) angepasst ist, um die von dem entsprechenden Phasenmodulator (20) erzeugte Phasenverschiebung gemäß einer Frequenz, die zwischen 10 kHz und 1 MHz ist, zu variieren.

7. Struktur (100) nach einem der vorstehenden Ansprüche, in welcher jeder Phasenmodulator (20) eines Typs mit Lithium-Niobat-Anteil ist.

8. Struktur (100) nach einem der vorstehenden Ansprüche, die angepasst ist, um die Synchronisationssuchsequenz periodisch zu wiederholen und nach Abschluss jeder Synchronisationssuchsequenz das Auswahlsystem zu aktivieren,
oder das Synchronisationsdetektionssystem ferner angepasst ist, um während eines Lichtsammelbetriebs, der von der Struktur mithilfe einer letzten Ausführung der Synchronisationssuchsequenz durchgeführt wird, eine Verringerung der von dem Ausgang (S₀) des optischen Hauptkopplers (102) weitergeleiteten Lichtstärke zu detektieren und, wenn eine solche Verringerung detektiert worden ist, eine Modifikation der Phasenverschiebungswerte zu steuern, die geeignet ist, die maximale Lichtstärke am Ausgang des optischen Hauptkopplers mindestens teilweise wiederherzustellen.

9. Optischer Empfänger für Kommunikation mittels Laserbündel (1000), aufweisend:
- eine Struktur (100) nach einem der Ansprüche 1 bis 8; und
- einen Detektions- und Verarbeitungsweg (130), der angepasst ist, um aus einer zu dem Detektions- und Verarbeitungsweg weitergeleiteten Strahlung Daten zu extrahieren, die in Form von Modulationen der Strahlung kodiert sind,
wobei der Empfänger (1000) derart konfiguriert ist, dass, wenn der Empfänger in Betrieb ist und wenn die Struktur (100) einen Teil des Laserbündels sammelt, das von einem außerhalb des Empfängers befindlichen Endgerät für optische Kommunikation mittels Laserbündel herkommt, die Struktur den gesammelten Teil des Laserbündels zu dem Detektions- und Verarbeitungsweg (130) weiterleitet.

10. Empfänger (1000) nach Anspruch 9, in welchem jedes Modul (1, 2, 3 ...) Abmessungen hat, die kleiner als 10cm sind, so dass, wenn der Teil des Laserbündels, der gesammelt wird, einen Atmosphärenbereich durchquert, von atmosphärischen Fluktuationen hervorgerufene Wellenfrontablenkungen des Teils des Laserbündels nach Abschluss der Ausführung der Synchronisationssuchsequenz kompensiert sind.

11. LIDAR-System (2000) aufweisend:
- eine Laserquelle (121);
- einen Sendeweg (122), der konfiguriert ist, um bei einem Betrieb des LIDAR-Systems (2000) eine aus der Laserquelle stammende Strahlung in Richtung mindestens eines Ziels, das außerhalb des LIDAR-Systems ist, zu senden;
- eine Struktur (100) nach einem der Ansprüche 1 bis 8; und
- einen LIDAR-Detektions- und Verarbeitungsweg (140), der angepasst ist, um ausgehend von einer zu dem LIDAR-Detektions- und Verarbeitungsweg weitergeleiteten Strahlung Evaluationen, die Position und/oder Geschwindigkeit relativ zu dem mindestens einen Ziel betreffen, bereitzustellen,
in welchem die Struktur (100) angeordnet ist, um während des Betriebs des LIDAR-Systems einen Teil der Strahlung, die von dem Sendeweg emittiert, dann von dem mindestens einen Ziel reflektiert oder zurückgestreut worden ist, zu sammeln und den gesammelten Teil der Strahlung zu dem LIDAR-Detektions- und Verarbeitungsweg (140) weiterzuleiten.

## Claims

1. A structure (100) for collecting light, comprising several modules (1, 2, 3...), and each module comprising:
- a substrate (SU);
- elementary light collectors (10) which are juxtaposed on the substrate (SU); and
- a waveguide mesh (12) which is carried by the substrate (SU), and which optically connects each elementary light collector (10) of the module (1, 2, 3...) to an optical output (S₁, S₂, S₃...) of said module, so that when a light beam is incident onto the structure (100), an elementary part of the beam which is collected by any one of the elementary light collectors of the module is transmitted to said optical output of the module via the waveguide mesh,
wherein, for each module (1, 2, 3...), the waveguide mesh (12) has a fractal arrangement of division between the optical output (S₁, S₂, S₃...) and the elementary light collectors (10) of said module, in a direction of observation going from said optical output towards the elementary light collectors,
the structure (100) further comprises a main optical coupler (102) with several inputs and a single output (S₀), the optical output (S₁, S₂, S₃...) of each module (1, 2, 3...) being optically connected to one of the inputs of said main optical coupler separately from the other modules by a respective optical transfer path (1C, 2C, 3C...) which comprises a phase modulator (20),
and the structure (100) further comprises, for each phase modulator (20), an electrical modulation signal source (21) which is connected to a modulation input of said phase modulator, so that the optical transfer paths (1C, 2C, 3C...) transmit to the main optical coupler (102) respective parts of the light beam incident onto the structure, in accordance with phase shifts which are produced by the phase modulators,
the electrical modulation signal sources (21) being arranged to, during a synchronisation search sequence, simultaneously vary all the phase shifts so as to scan variable combinations of values for all said phase shifts,
and the structure (100) being **characterised in that** it further comprises:
- a synchronisation detection system, which is arranged to detect, during the synchronisation search sequence, a synchronisation instant at which the output (S₀) of the main optical coupler (102) transmits a light power which is maximum; and
- a selection system, which is adapted to select the values of the phase shifts as existing at the synchronisation instant, and to control, after an interruption of the synchronisation search sequence, an operation of the electrical modulation signal sources (21) where the phase shifts produced by the phase modulators (20) conform to the selected values.

2. The structure (100) according to claim 1, wherein the elementary light collectors (10) and the waveguide meshes (12) of the modules (1, 2, 3...) are designed to be effective when the beam of light which is incident onto the structure belongs to a spectral range of efficiency of said structure for collecting light, and each elementary collector has dimensions which are smaller than three times any wavelength of the spectral range of efficiency of said structure.

3. The structure (100) according to claim 1 or 2, wherein the division fractal arrangement of the waveguide mesh (12) of at least one of the modules (1, 2, 3, ...) comprises optical couplers (11) each with several inputs and one output, which belong to successive division levels counted from the optical output (S₁, S₂, S₃...) of the module, with said optical output of the module which is optically connected to the output of one of the optical couplers which constitutes a first one of the division levels, and each output of an optical coupler which belongs to one of the division levels higher than said first level is connected by a respective waveguide segment to one of the inputs of an optical coupler of the preceding level, up to the elementary light collectors (10) which are each optically connected to an input of one of the optical couplers.

4. The structure (100) according to claim 3, wherein the division fractal arrangement of the waveguide mesh (12) of at least one of the modules (1, 2, 3, ...), comprising the optical couplers (11) and waveguide segments, constitutes H-shaped geometric patterns on the substrate of said module.

5. The structure (100) according to any one of the preceding claims, wherein each module (1, 2, 3...) includes at least 10000 elementary light collectors (10) which are optically connected to the optical output (S₁, S₂, S₃...) of said module by the waveguide mesh (12) with fractal arrangement.

6. The structure (100) according to any one of the preceding claims, wherein each electrical modulation signal source (21) is adapted to vary the phase shift produced by the corresponding phase modulator (20) according to a frequency which is comprised between 10 kHz and 1 MHz.

7. The structure (100) according to any one of the preceding claims, wherein each phase modulator (20) is of a lithium niobiate portion type.

8. The structure (100) according to any one of the preceding claims, adapted to periodically repeat the synchronisation search sequence and to activate the selection system at the end of each synchronisation search sequence,
or the synchronisation detection system is further adapted to detect, during an operation of light collection by the structure from a last execution of the synchronisation search sequence, a reduction in the light power which is transmitted by the output (S₀) of the main optical coupler (102), and to control, when such a reduction is detected, a modification of the phase shift values which is appropriate to recover at least partially the maximum light power at said output of the main optical coupler.

9. An optical laser beam communication receiver (1000), comprising:
- a structure (100) in accordance with any one of claims 1 to 8; and
- a detection and processing channel (130), adapted to extract from radiation which is transmitted to said detection and processing channel, data which are encoded in the form of modulations of the radiation,
the receiver (1000) being arranged so that, during an operation of said receiver and when the structure (100) collects a laser beam portion originating from an optical laser beam communication terminal which is external to said receiver, said structure transmits the collected portion of the laser beam to the detection and processing channel (130).

10. The receiver (1000) according to claim 9, wherein each module (1, 2, 3...) has dimensions less than 10 cm, so that when the portion of the laser beam which is collected passes through an atmosphere portion, wavefront deviations of said portion of the laser beam which are caused by atmospheric fluctuations are compensated at the end of an execution of the synchronisation search sequence.

11. A LIDAR system (2000) comprising:
- a laser source (121);
- an emission channel (122), arranged to emit, during an operation of the LIDAR system (2000), radiation originating from the laser source towards at least one target which is external to said LIDAR system;
- a structure (100) according to any one of claims 1 to 8; and
- a LIDAR detection and processing channel (140), adapted to provide from radiation which is transmitted to said LIDAR detection and processing channel, assessments of position and/or speed relating to said at least one target,
wherein the structure (100) is arranged, during the operation of the LIDAR system (2000), for collecting a part of the radiation which was emitted by the emission channel (122) then reflected or backscattered by said at least one target, and for transmitting the collected part of the radiation to the LIDAR detection and processing channel (140).
